# EUROPÄISCHE PATENTSCHRIFT

(11) **EP 2 565 491 B1**
(45) Veröffentlichungstag und Bekanntmachung des Hinweises auf die Patenterteilung: **10.10.2018**
(21) Anmeldenummer: 12181817.3
(22) Anmeldetag: 24.08.2012
(51) Int. Cl.: F16F 9/46, B62K 25/06, B62K 25/10, F16F 9/348

(54) **Feder-Dämpfervorrichtung für ein Fahrrad**
Spring damper device for a bicycle
Dispositif d'amortissement à ressort pour un vélo

(30) Priorität: 30.08.2011 DE 102011053127
(43) Veröffentlichungstag der Anmeldung: 06.03.2013
(73) Patentinhaber: Fox Factory Switzerland GmbH, 3084 Wabern (CH)
(72) Erfinder: Chen, Meng Tsung, 406 Taichung City, Beitun Dist. (TW); Felsl, Andreas, 2505 Biel (CH)
(74) Vertreter: Winter, Brandl, Fürniss, Hübner, Röss, Kaiser, Polte - Partnerschaft mbB

(56) Entgegenhaltungen:
- EP-A1- 2 112 401
- JP-A- H02 217 637
- JP-A- H02 275 128
- JP-A- H02 278 026
- JP-A- 2006 010 069
- US-A1- 2005 077 131
- US-B1- 6 279 703
- US-B1- 6 360 857

## Beschreibung

Die Erfindung betrifft eine Feder-Dämpfervorrichtung für ein Fahrrad gemäß dem Oberbegriff des Patentanspruchs 1, 13 oder 15.

Aus dem Stand der Technik sind eine Vielzahl von Feder-Dämpfervorrichtungen für Fahrräder bekannt. Zur Federung einer Hinterradschwinge eines Fahrrads ist üblicher Weise eine Federeinrichtung vorgesehen, bei der es sich um eine Luft- oder Stahlfedereinrichtung handelt, um im Einsatz des Fahrrads auftretende Stoßkräfte der Hinterradschwinge abzufedern. Zum Steuern der Feder, insbesondere um diese zu Dämpfen, ist in der Regel eine Dämpfereinrichtung vorgesehen.

Die Druckschrift US 6 360 857 B1 bildet den naheliegendsten Stand der Technik und offenbart eine derartige Feder-Dämpfervorrichtung. Diese hat ein an einem Fahrradrahmen festlegbares Gehäuse, an dem ein Luftzylinder angeordnet ist. Koaxial zum Luftzylinder ist in diesem eine fest mit dem Gehäuse verbundene Führungsstange angeordnet, auf der gleitend ein Gaskolben in dem Luftzylinder geführt ist und hierbei einen ersten von einem zweiten Luftraum im Luftzylinder trennt. Der Gaskolben ist mit einem rohrförmigen Dämpferkörper verbunden, der wiederum mit seinem vom Luftzylinder wegweisenden Endabschnitt mit einer zu dämpfenden Hinterradschwinge eines Fahrrads verbunden ist und etwa koaxial zur Führungsstange zusammen mit dem Gaskolben verschiebbar ist. In dem Dämpferkörper ist ein Dämpferkolben angeordnet, der fest mit der Führungsstange verbunden ist und in dem Dämpferkörper einen Zylinder von einem Ringraum trennt. Wird die Feder-Dämpfervorrichtung einem Stoß ausgesetzt, so wird der Gaskolben über den Dämpferkolben in Richtung des Gehäuses verschoben, wodurch der Gaskolben einen durch ihn begrenzten Luftraum im Luftzylinder verkleinert, wodurch der Stoß abgefedert wird. Gleichzeitig wird der Dämpferkörper relativ zum mit der Führungsstange fest verbundenen Dämpferkolben verschoben, wobei ein Druck im Zylinderraum erhöht wird. Damit eine Relativverschiebung zwischen dem Dämpferkörper und dem Dämpferkolben möglich ist, sind in dem Dämpferkolben zwei Ventile ausgebildet, die ab einer bestimmten Druckdifferenz zwischen dem Zylinderraum und dem Ringraum des Dämpferkörpers öffnen und somit eine fluidische Verbindung zwischen dem Zylinder- und Ringraum beigeben. Das erste Ventil der Feder-Dämpfervorrichtung öffnet in der Regel bei vergleichsweise geringen Einfederungsgeschwindigkeiten und somit bei vergleichsweise geringen Druckdifferenzen im Dämpferkörper. Ab einer bestimmten Einfederungsgeschwindigkeit öffnet dann das zweite Ventil als eine Art Überlastungsschutz zur Vermeidung von zu hohen Druckdifferenzen zwischen Zylinder- und Ringraum des Dämpferkörpers.

Nachteilig hierbei ist, dass schon bei vergleichsweise geringen Druckdifferenzen öffnet ein Durchschlag der Feder-Dämpfervorrichtung erfolgen kann, d. h., dass der Gaskolben auf das Gehäuse auftrifft, wodurch Beschädigungen auftreten können. Wird dagegen dass es erst bei vergleichsweise hohen Druckdifferenzen öffnet, so wird zwar ein Durchschlagen in der Regel vermieden, allerdings können hierdurch äußerst starke Druckkräfte in der Dämpfereinrichtung auftreten was ebenfalls zur Beschädigung führen kann. Des Weiteren ist im letzteren Fall nachteilig, dass das Fahrwerk des Fahrrads, insbesondere die Hinterradschwinge bei höheren Geschwindigkeiten sehr unsensibel reagiert, was zu einem Traktionsverlust führen kann.

In den Druckschriften US 6 279 703 B1, EP 2 112 401 A1 und US 2005/077131 A1 sind weitere Ausführungsformen von Feder-Dämpfervorrichtungen gezeigt. Die Druckschrift JP H02 275128 A offenbart eine Dämpfervorrichtung.

Dem gegenüber liegt der Erfindung die Aufgabe zugrunde, eine Feder-Dämpfervorrichtung zu schaffen, die die genannten Nachteile überwindet.

Diese Aufgabe wird gelöst durch eine Feder-Dämpfervorrichtung gemäß den Merkmalen des Patentanspruchs 1. Sonstige vorteilhafte Weiterbildungen der Erfindung sind Gegenstand weiterer Unteransprüche.

Erfindungsgemäß hat eine Feder-Dämpfervorrichtung für ein Fahrrad ein, insbesondere an einem Fahrradrahmen, festlegbares Gehäuse. An diesem ist eine Federeinrichtung abstützbar, wobei es sich bei der Federeinrichtung insbesondere um eine Luftfedereinrichtung und/oder um eine Stahlfedereinrichtung handelt. Die Federeinrichtung ist über einen Dämpferkörper einer Dämpfereinrichtung in einer Federrichtung spannbar. Der Dämpferkörper ist hierbei mit einem zu dämpfenden Element, beispielsweise einer Hinterradschwinge des Fahrrads, verbunden. In dem Dämpferkörper ist ein fest am Gehäuse insbesondere über eine Führungsstange festgelegter Dämpferkolben verschiebbar geführt. Mit dem Dämpferkolben wird der Dämpferkörper in zwei Dämpferräume geteilt. Zur Dämpfung einer Federung der Federeinrichtung durch die Dämpfereinrichtung, weist diese drei Ventile auf, bei denen es sich insbesondere um Druckbegrenzungsventile handelt. Mit diesen Ventilen ist ein Volumenstrom eines Fluids zwischen den Dämpfungsräumen beim Spannen der Federeinrichtung in Federrichtung steuerbar, wodurch wiederum Dämpfungskräfte der Dämpfereinrichtung gesteuert sind. Diese Lösung hat den Vorteil, dass die Ventile bei unterschiedlichen Druckdifferenzen zwischen den Dämpferräumen öffnen können, wodurch gewünschte Dämpfungskräfte der Dämpfvorrichtung, im Vergleich zum Stand der Technik, der nur zwei Ventile aufweist, besser eingestellt werden können. Bei Auftreten eines Stoßes der durch die Feder-Dämpfervorrichtung abgefedert wird, kann dann ein Ventil bei geringen Stoßgeschwindigkeiten, d. h. einer geringen Verschiebegeschwindigkeit des Dämpferkörpers, und somit bei vergleichsweise geringen Druckdifferenzen zwischen den Dämpferräumen öffnen, während das zweite Ventil zusätzlich bei stärken Stößen bzw. höheren Verschiebegeschwindigkeiten des Dämpferkörpers und somit größeren Druckdifferenzen öffnen kann. Das dritte Ventil kann dann als Überlastungsschutz dienen und bei sehr starken Stößen und somit sehr hohen Verschiebegeschwindigkeiten des Dämpferkörpers zusätzlich zu den beiden anderen Ventilen geöffnet werden. Das zweite Ventil regelt somit insbesondere mittlere und schnelle Verschiebebewegungen des Dämpferkörpers. Ein Öffnungsquerschnitt des zweiten Ventils kann geringer als im Stand der Technik sein, da bei äußerst hohen Geschwindigkeiten des Dämpferkörpers zusätzlich das dritte Ventil öffnet, um einen hohen Volumenstrom zwischen den Dämpferräumen zum Abbau der Druckbelastung zu ermöglichen. Da die beiden Ventile somit im Vergleich zum Stand der Technik jeweils einen geringeren Strömungsquerschnitt freigeben und nur gemeinsam einen mit dem Stand der Technik vergleichbaren Strömungsquerschnitt freigeben, können diese am Ende der Verschiebebewegung des Dämpferkörpers jeweils vergleichsweise schnell schließen, wodurch eine Schubumkehr der Feder-Dämpfervorrichtung äußerst schnell erfolgt.

In weiterer Ausgestaltung der Erfindung ist der Dämpferkolben an einer Führungsstange angeordnet, die am Gehäuse befestigt ist, wobei der Dämpferkolben dann in dem Dämpferkörper einen Zylinder- von einem Ringraum trennt und die Ventile jeweils einem Volumenstrom des Fluids im Dämpferkörper steuern, der durch den Dämpferkolben strömt.

Vorzugsweise steuern die Ventile den Volumenstrom des Fluids bei einer Bewegung des Dämpferkörpers in Federrichtung der Federeinrichtung, d. h., bei einem Spannen der Federeinrichtung. Die Ventile öffnen hierbei bei unterschiedlichen Druckdifferenzen zwischen dem Ring- und Zylinderraum. Wird die vorbestimmte Druckdifferenz eines Ventils wieder unterschritten, so schließt das jeweilige Ventil.

Vorzugsweise hat das erste Ventil einen ringförmigen Ventilkörper, der entlang der Führungsstange geführt ist und über eine Ventilfeder gegen eine Stirnfläche des Dämpferkolbens gespannt ist. Bei einer bestimmten Druckdifferenz zwischen Zylinder- und Ringraum des Dämpferkörpers wird der Ventilkörper durch einen Druck des Fluids in eine Öffnungsposition weg vom Dämpferkolben gegen die Federkraft der Ventilschieber verschoben. Hierbei gibt der Ventilkörper eine im Dämpferkolben eingebrachte erste Verbindungsaussparung zwischen dem Zylinder- und Ringraum frei. Die Ventilfeder ist hier vorzugsweise an der Führungsstange festgelegt. Ein derartiges Ventil ist vorrichtungstechnisch äußerst einfach und kostengünstig aufgebaut.

Mit Vorteil hat das zweite Ventil eine vom Ventilkörper des ersten Ventils umgriffene und an der Führungsstange festgelegte Federscheibe. Diese liegt insbesondere im geschlossenen Zustand an der Stirnfläche des Dämpferkolbens an und wird aufgrund von Druckkräften des Fluids im Dämpferkörper bei einer bestimmten Druckdifferenz zwischen dem Zylinder- und Ringraum elastisch mit abschnittsweise weg vom Dämpferkolben verformt und gibt hierbei eine in dem Dämpferkolben eingebrachte zweite Verbindungsaussparung zwischen dem Zylinder- und Ringraum frei. Hierbei handelt es sich ebenfalls um ein äußerst aufgebautes und kostengünstiges Ventil.

Bevorzugter Weise ist ein an der Führungsstange festgelegter, insbesondere hohlzylindrischer, Führungsring zum Führen des Ventilkörpers des ersten Ventils vorgesehen. Dieser liegt am Dämpferkolben an und hat eine Durchgangsöffnung die fluidisch mit der zweiten von dem zweiten Ventil gesteuerten Verbindungsaussparung verbunden ist. Die Federscheibe des zweiten Ventils liegt hierbei an dem Führungsring im geschlossenen Zustand an und steuert über diesen die zweite Verbindungsaussparung des Dämpferkolbens und die mit diesem verbundene Durchgangsöffnung des Führungsrings. Durch den Führungsring können das erste und zweite Ventil somit äußerst kompakt, platzsparend benachbart zueinander angeordnet werden.

In weiterer Ausgestaltung der Erfindung ist das dritte Ventil ein Steuerventil zum Steuern eines Strömungspfads des Fluids vom Zylinder- zum Ringraum, wobei der Strömungspfad insbesondere auf- und zusteuerbar ist.

Zum Einstellen von Druckkräften, bei denen das erste oder zweite Ventil öffnen, wird einfach die Anzahl der diesen zugeordneten Federscheiben verändert. Zusätzlich oder alternativ können auch Federscheiben mit unterschiedlichen mechanischen Eigenschaften, beispielsweise mit einer unterschiedlichen Elastizität, eingesetzt werden.

Damit die Federscheiben des ersten und zweiten Ventils voneinander beabstandet sind, weist vorteilhafterweise der ringförmige Ventilkörper des ersten Ventils einen sich vom Dämpferkolben weg erstreckenden Stützbund auf, über den dieser sich dann der ihm zugeordneten Federscheibe abstützt.

Damit bei geöffnetem zweiten Ventil Fluid vom Zylinder zum Ringraum strömen kann, ist in dem Stützbund des ringförmigen Ventilkörpers des ersten Ventils zumindest eine Durchgangsöffnung eingebracht.

Zur Erhöhung eines Volumenstroms zwischen dem Zylinder- und dem Ringraum bei geöffnetem ersten und zweiten Ventil, ist zwischen einer Außenmantelfläche des Führungsrings und einer Innenmantelfläche des ringförmigen Ventilkörpers des ersten Ventils zumindest eine Strömungsaussparung vorgesehen. Diese kann einfach als Längsnut in die Innenmantelfläche des ringförmigen Ventilkörpers eingebracht sein.

Erfindungsgemäß hat eine Feder-Dämpfervorrichtung ein festlegbares Gehäuse, an dem eine Federeinrichtung abstützbar ist. Diese ist über einen mit einem zu dämpfenden Element verbindbarem Dämpferkörper einer Dämpfereinrichtung spannbar. Der Dämpferkörper weist einen am Gehäuse festgelegten Dämpferkolben auf, der in diesem zwei Dämpferräume räumlich trennt. Über ein Ventil ist hierbei eine fluidische Verbindung zwischen den Dämpferräumen steuerbar, wobei das Ventil über einen am Gehäuse angeordneten und relativ zum Gehäuse verschwenkbaren Hebel auf- und zusteuerbar ist. Vorteilhafterweise ist das Ventil dann vollständig aufgesteuert, wenn der Hebel sich etwa parallel zu einer Längsrichtung der Feder-Dämpfervorrichtung erstreckt.

Diese Lösung hat den Vorteil, dass eine Bedienperson des Hebels, beispielsweise ein Fahrradfahrer eines die Feder-Dämpfervorrichtung aufweisenden Fahrrads eindeutig feststellen kann, ob das Ventil vollständig geöffnet ist. Dagegen ist im Stand der Technik ein derartiger Hebel sowohl bei einem geöffneten Ventil als auch bei einem geschlossenen Ventil schräg zur Längsrichtung der Feder-Dämpfervorrichtung angeordnet, womit es für einen Bediener des Hebels schwierig sein kann, zu wissen, ob das mit dem Hebel zu steuernde Ventil nun geöffnet oder geschlossen ist.

Vorzugsweise ist der Dämpferkolben über eine Führungsstange am Gehäuse festgelegt und trennt im Dämpferkörper einen von der Führungsstange durchsetzten Ringraum von einem Zylinderraum, wobei mit dem Hebel ein Volumenstrom eines Fluids vom Zylinder- in Richtung des Ringraums des Dämpferkolbens steuerbar ist.

Erfindungsgemäß hat eine Feder-Dämpfervorrichtung für ein Fahrrad ein festlegbares Gehäuse, an dem ein Federrohr einer Luftfedereinrichtung fest angeordnet ist. In dem Federrohr ist ein Gaskolben zur Luftfederung geführt, der über einen mit einem zu dämpfenden Element, beispielsweise einer Hinterradschwinge, verbindbaren Dämpferkörper einer Dämpfereinrichtung in dem Federrohr verschiebbar ist. Zur Luftfederung begrenzt der Gaskolben zusammen mit dem Federrohr einen Luftraum, wobei vorteilhafter Weise ein Volumen des Luftraums durch die Größe eines am Gehäuse festlegbaren und im Luftraum angeordneten Spacers bestimmt ist. Hierdurch kann bei der Montage das Volumen des Luftraums durch die Größe des eingesetzten Spacers variiert werden. Im Stand der Technik wird dagegen nachteilig die Größe des Luftraums durch unterschiedlich große Federrohre festgelegt. Um Gewicht zu sparen, können die Spacer hohl ausgeführt sein oder aus einem geschlossenen, zelligen Kunststoff. Mit dem Spacer kann somit auf einfache Weise eine Federkernlinie der Feder-Dämpfervorrichtung an gewünschte Einsatzbedingungen der Feder-Dämpfervorrichtung angepasst werden.

Im Folgenden wird die Erfindung anhand schematischer Zeichnungen näher erläutert.

Es zeigen:
Figur 1 in einer schematischen Längsschnittansicht eine Feder Dämpfervorrichtung gemäß einem Ausführungsbeispiel;
Figur 2 einen vergrößerten Ausschnitt der Feder-Dämpfervorrichtung aus Figur 1;
Figur 3 einen vergrößerten Ausschnitt der Feder-Dämpfervorrichtung aus Figur 1;
Figur 4 einen vergrößerten Ausschnitt der Feder-Dämpfervorrichtung aus Figur 1;
Figur 5 in einer perspektivischen Darstellung Elemente der Feder-Dämpfervorrichtung aus Figur 1;
Figur 6 in einem Diagramm mehrere Geschwindigkeit-Dämpfungskraft-Kennlinien; und
Figur 7 Seitenansichten der Feder-Dämpfervorrichtung gemäß dem Ausführungsbeispiel.

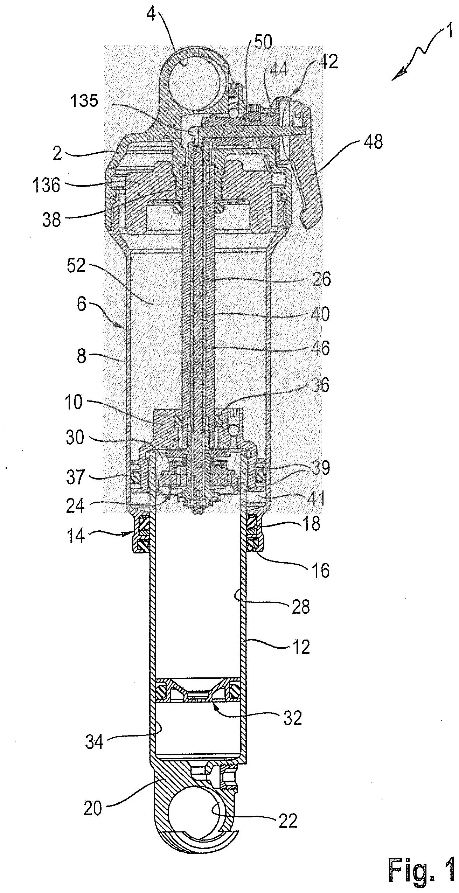

In Figur 1 ist in einer Längsschnittansicht schematisch eine Feder-Dämpfervorrichtung 1 gemäß einem Ausführungsbeispiel dargestellt. Diese dient zur Federung einer Hinterradschwinge eines Fahrrads, insbesondere eines Mountainbikes. Die Vorrichtung 1 hat ein Gehäuse 2 an dem eine Öse 4 ausgebildet ist, mit dem diese an einem Fahrradrahmen eines Fahrrads, insbesondere an einem Rahmenrohr, festklebbar ist. Das Gehäuse 2 wird damit an der Öse 4 derart am Fahrradrahmen befestigt, dass es noch in einer Rahmenebene verschwenkbar ist. Das Gehäuse 2 ist als Zylinderboden eines im Wesentlichen rohrförmigen Luftzylinders 6 ausgebildet. Der Luftzylinder 6 hat ein mit Luft gefülltes Federrohr 8, das an seinem im Gehäuse 2 zuweisenden Endabschnitt ein Außengewinde aufweist über das dies in das Gehäuse 2 in ein entsprechendes Innengewinde dichtend eingeschraubt ist. In dem Federrohr 8 ist ein Gaskolben 10 axial verschiebbar angeordnet, der fest mit einem Dämpferkörper 12 verbunden ist. Der im Wesentlichen hohlzylindrisch ausgebildete Dämpferkörper 12 ist dabei mit seinem zum Gehäuse 2 weisenden Endabschnitt in eine Innenaussparung des Gaskolbens 10 eingeschraubt und somit fest mit diesem verbunden. Der Dämpferkörper 12 durchsetzt einen vom Gehäuse 2 wegweisenden Endabschnitt des Federrohrs 8, der als Führungsbuchse 14 für den Federdämpferkörper 12 ausgebildet ist. Die Führungsbuchse 14 des Federrohrs 8 hat hierbei einen Abstreiferring 16 und einen Dichtring 18. Der Dämpferkörper 12 hat einen vom Gehäuse 2 wegweisenden abgeschlossenen Endabschnitt 20, der eine Öse 22 aufweist, über die Feder-Dämpfervorrichtung 1 mit einer zu dämpfenden Hinterradschwinge des Fahrrads verbunden ist. Die Verbindung erfolgt dabei ebenfalls derart, dass die Feder-Dämpfervorrichtung 1 über die Öse 22 in einer Rahmenebene verschwenkbar ist. Zur Dämpfung einer Federung ist in dem hohlzylindrischen Dämpferkörper ein Dämpferkolben 24 angeordnet, der über eine das Federrohr 8, den Gaskolben 10 und abschnittsweise den Dämpferköper 12 durchsetzende Führungsstange 26 befestigt ist, die wiederum mit ihrem von Dämpferkolben 24 wegweisenden Endabschnitt am Gehäuse 2 beziehungsweise Zylinderboden fixiert ist. Der Dämpferkolben 24 trennt in dem Dämpferkörper 12 einen Zylinderraum 28 von einem von der Führungsstange 26 durchsetzten Ringraum 30. Des Weiteren ist innerhalb des Dämpferkörpers 12 ein in Längsrichtung verschiebbarer Trennkolben 32 angeordnet, der den Zylinderraum 28 von einem Ausgleichsraum 34 trennt. Dieser dient zum Ausgleich des Volumens, wenn die Führungsstange 26 bei einer Längsverschiebung des Dämpferkörpers 12 in Richtung des Gehäuses 2 in diesen eintaucht.

Der Gaskolben 10 ist gleitend auf der Führungsstange 26 über eine Ringdichtung 36 geführt, über die auch der Dämpferkolben 24 gegenüber dem Federrohr 8 abgedichtet ist. Des Weiteren ist der Gaskolben 10 über einen Dichtring 37 und zwei benachbart dazu angeordnete Gleitringe 39 innerhalb des Federrohrs 8 geführt. Der Gaskolben 10 trennt hierbei einen von der Führungsstange 26 durchsetzten Ringraum 52 von einem von dem Dämpferkörper 12 durchsetzten Ringraum 41 des Luftzylinders 6. Eine Funktionsweise des Gaskolbens 10 entspricht hierbei beispielsweise entsprechend, wie eingangs erläutert, Stand der Technik. In dem Dämpferkörper 12 sind im Bereich des Dämpferkolbens 24 mehrere Ventile ausgebildet, um einen Volumenstrom eines Fluids zwischen dem Zylinderraum 28 und dem Ringraum 30 des Dämpferkörpers 12 zu steuern, was unten stehend in den folgenden Figuren näher erläutert ist.

Die Führungsstange 26 ist rohrförmig ausgebildet und mit ihrem Endabschnitt dichtend in einen Axialvorsprung 38 des Gehäuses 2 eingeschraubt. In die Führungsstange 26 ist dabei ein rohrförmiger Zugstufenventilkörper 40 eingesetzt, mit dem ein Öffnungsquerschnitt eines Ventils im Bereich des Dämpferkolbens 24 steuerbar ist, indem dieser in axialer Richtung relativ zur Führungsstange 26 über eine Rebound- bzw. Zugstufenverstellvorrichtung 42 verstellbar ist. Diese hat einen radial zur Längsachse in das Gehäuse eingesetzten Drehknopf, dessen Endabschnitt mit dem Endabschnitt des Zugstufenventilkörpers 40 zusammenwirkt. In dem rohrförmigen Zugstufenventilkörper 40 ist des Weiteren ein stiftförmiger Kompressionsventilkörper 46 axial verschiebbar eingesetzt, über den ein Öffnungsquerschnitt eines Ventils im Bereich des Dämpferkolbens 24 einstellbar ist (Öffnungsquerschnitt), was ebenfalls unten stehende näher erläutert wird. Zum Einstellen des Öffnungsquerschnitts wird der Ventilkörper 46 in Axialrichtung verschoben, was über einen Hebel 48 erfolgt. Der Hebel 48 ist dabei auf einer axial den Drehknopf 44 durchsetzenden Hebelachse 50 angeordnet, die mit ihrem vom Hebel 48 wegweisenden Endabschnitt mit dem Ventilkörper 46 zusammenwirkt.

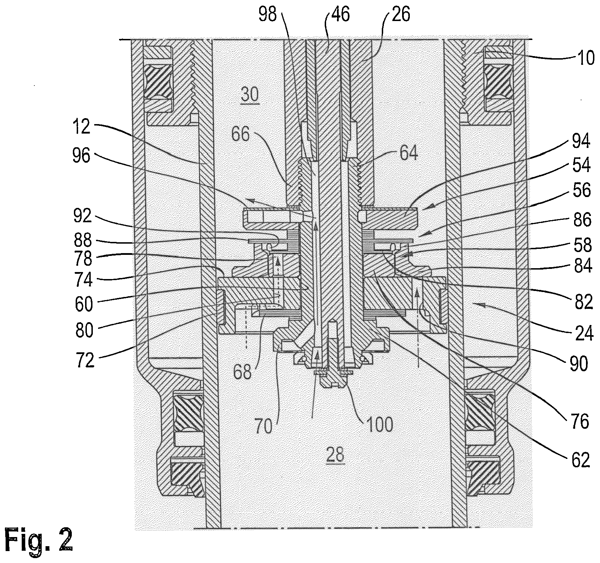

Die Ventile im Bereich des Dämpferkolbens 24 werden anhand der Figur 2 näher erläutert.

Figur 2 zeigt einen Ausschnitt der Feder-Dämpfervorrichtung 1 aus Figur 1 im Bereich des Dämpferkolbens 24. Der Gaskolben 10 ist in dieser Ansicht zusammen mit dem Dämpferkörper 12 in Richtung des Gehäuses 2 aus Figur 1 verschoben. Die Verschiebung ist die Folge eines Kraftstoßes der Hinterradachse, die über die Öse 22 in Figur 1 auf den Dämpferkörper 12 und über diesen auf den Gaskolben 10 übertragen wird, wodurch sich der Gaskolben 10 mit dem Dämpferkörper 12 in Richtung einer Verkleinerung eines mit Luft gefüllten Ringraums 52 des Luftzylinders 6 aus Figur 1 verschiebt, um diese Stoßkraft durch eine Luftfederung abzufedern. Zum Dämpfen dieser Luftfederung ist der Dämpferkolben 24 aus Figur 2 mit drei Ventilen 54, 56 und 58 vorgesehen, die einen Volumenstrom eines Fluids vom Zylinderraum 28 zum Ringraum 30 des Dämpferkolbens 24 steuern.

Der Dämpferkolben 24 ist topfförmig ausgebildet und weist mittig eine zylindrische Aussparung 60 auf. Über diese ist der Dämpferkolben 24 auf ein T-förmiges Ventilstück 62 gesetzt, das mit seinen in Richtung des Gehäuses 2 aus Figur 1 weisenden Endabschnitt in einen vom Gehäuse 2 wegweisenden Endabschnitt 66 der Führungsstange 26 eingeschraubt ist. Der Dämpferkolben 24 ist dabei auf einen Längsschenkel des T-förmigen Ventilstücks 62 gesetzt und über eine Mehrzahl von Beilagscheiben 68 von einem Querschenkel 70 des T-förmigen Ventilstücks 62 beabstandet. Der Dämpferkolben 24 weist dabei mit seinem konkaven Innenbereich weg vom Gehäuse 2 aus Figur 1. An seinem Außenumfang hat der Dämpferkolben 24 einen Kolbenring 72. Eine vom Querschenkel 70 des T-förmigen Ventilstücks 62 wegweisenden Stirnseite 74 des Dämpferkolbens 24 ist im Wesentlichen eben ausgebildet. Auf dieser liegt ein etwa hohlzylindrischer Führungsring 76, der eine kreiszylindrische Innenaussparung hat, mit einem Durchmesser, der in etwa dem Durchmesser der Aussparung 60 des Dämpferkörpers 12 entspricht, und über die der Führungsring 76 auf dem Ventilstück 62 angeordnet ist, in dem dieser das Führungsstück 62 umgreift. Der Führungsring 76 hat drei sich axial ersteckende Durchgangsöffnungen, wovon eine Durchgangsöffnung 78 in der Figur 2 dargestellt ist. Diese sind etwa koaxial zu einer jeweiligen Durchgangsöffnung des Dämpferkolbens 24 angeordnet, wobei in der Figur 2 nur eine Durchgangsöffnung 80 dargestellt ist. Die Durchgangsöffnungen 78 und 80 dienen zur Durchführung eines Volumenstroms des Fluids vom Zylinderraum 28 zum Ringraum 30. Um diesen Volumenstrom zu steuern ist das Ventil 58 vorgesehen, das eine Beilagscheibe beziehungsweise Federscheibe 82 aufweist, die in etwa einen gleichen Durchmesser wie der Führungsring 76 hat und auf dessen vom Dämpfungskolben 24 wegweisenden Stirnseite anliegt. Eine Durchgangsöffnung der Federscheibe 82 ist entsprechend der Aussparung 60 des Dämpferkolbens 24 ausgebildet, womit die Federscheibe 82 auf das Ventilstück 62 gesetzt und festgelegt ist. Die Federscheibe 82 wird über die Durchgangsbohrungen 78, 80 mit Druck vom Zylinderraum 28 beaufschlagt und auf ihrer vom Dämpferkolben 24 wegweisenden Seite vom Druck des Ringraums 30. Bei einer bestimmten Druckdifferenz zwischen dem Zylinderraum 28 und dem Ringraum 30 wird die Federscheibe 82 weg vom Führungsring 76 elastisch aufgebogen, womit ein Volumenstrom des Fluids vom Ringraum 28 zum Zylinderraum 30 strömen kann. Das Ventil 56 hat einen ringförmigen Ventilkörper 84, der mit seiner Innenmantelfläche auf einer Außenmantelfläche des Führungsrings 76 axial verschiebbar geführt ist. Mit einer zum Dämpferkolben 24 weisenden Ventilfläche liegt dieser im geschlossenen Zustand an der Stirnseite 74 des Dämpferkolbens 24 im Wesentlichen an. Der ringförmige Ventilkörper 84 ist in Axialrichtung durch einen ringförmigen Stützbund 86 verlängert und weist mit diesem in Längsrichtung gesehen eine größere Breite als der Führungsring 76 auf. Mit dem Stützbund 86 stützt sich der ringförmige Ventilkörper 84 an zwei übereinander angeordnete Federscheiben 88 ab, die einen größeren Durchmesser am Führungsring 76 angeordnete Federscheibe aufweisen. Im geschlossenen Zustand in der Figur 2 schließt der Ventilkörper 84 des Ventils 56 eine Durchgangsbohrung 90 des Dämpferkolbens 24 ab, wobei die Durchgangsbohrung 90 radial gesehen weiter außen als die Durchgangsöffnung 80 liegt. Der Ventilkörper 84 wird somit durch die Durchgangsbohrung 90 von einem Druck des Fluids im Zylinderraum 28 beaufschlagt, wobei ab einer bestimmten Druckdifferenz zwischen dem Zylinderraum 28 und dem Ringraum 30 der Ventilkörper 84 in Richtung weg vom Dämpferkolben 24 axial verschoben wird, wodurch die Federscheiben 88 elastisch gebogen und gespannt werden. Sinkt eine bestimmte Druckdifferenz zwischen dem Zylinderraum 28 und dem Ringraum 30, so entspannen sich die Federscheiben 88, wodurch der ringförmige Ventilkörper 84 des Ventils 56 axial zurück zum Dämpferkolben 24 verschoben wird und die Durchgangsbohrung 90 verschließt.

Die Federscheiben 88 sind von der Federscheibe 82 über mehrere Beilagscheiben, die einen wesentlich geringeren Durchmesser als die Federscheibe 82 aufweisen voneinander beabstandet. In dem Ventilkörper 84 sind des Weiteren im Bereich des Stützbunds 86 Radialaussparungen 92 eingebracht, damit bei geöffneten Ventil 58 Fluid über die Durchgangsöffnung 78 des Führungsrings 76 und die Radialaussparung 92 zum Ringraum 30 strömen kann.

Über mehrere Beilagscheiben von den Federscheiben 88 beabstandet ist das Ventil 54 auf dem Ventilstück 62 angeordnet. Dieses hat ein topfförmiges Ventilteil 94, das mit seiner konkaven Seite weg vom Dämpferkolben 24 weist. Das Ventilteil 94 ist über eine zylindrische Aussparung auf das Ventilstück 62 gesetzt. Die konkave Seite des Ventilteils 94 ist durch eine Federscheibe 96 verschlossen, deren Durchmesser etwas größer als der Durchmesser der Federscheiben 88 des Ventils 56 ist. Die Federscheibe ist ebenfalls auf dem Ventilstück 62 angeordnet. In den konkaven Innenraum des Ventilteils 94 des Ventils 54 mündet eine Radialbohrung des Ventilstücks 62, die mit einer axialen Durchgangsbohrung 98 des Ventilstücks 62 verbunden ist. Durch die Durchgangsbohrung 98 des Ventilstücks 62 ist der Kompressionsventilkörper 46 hindurchgeführt, der einen geringeren Außendurchmesser als die Durchgangsbohrung 98 hat, womit zwischen der Durchgangsbohrung 98 und dem Kompressionsventilkörper 46 ein Ringkanal ausgebildet ist, der den konkaven Innenraum des Ventilteils 94 fluidisch mit dem Zylinderraum 28 verbindet. Die Federscheibe 96 des Ventils 54 wird somit vom Zylinderraum 28 über den Ringraum des Ventilstücks 62, die radiale Durchgangsbohrung und den konkaven Innenraum des Ventilteils 94 mit einem Druck beaufschlagt. Ab einer bestimmten Druckdifferenz zwischen dem Zylinderraum 28 und dem Ringraum 30 wird die Federscheibe 96 elastisch vom Ventilteil 94 weggebogen, wodurch ein Öffnungsquerschnitt für einen Volumenstrom des Fluids zwischen dem Zylinderraum 28 und dem Ringraum 30 freigegeben ist. Auf der Federscheibe 96 ist eine weitere Beilagscheibe angeordnet, die an einer Ringstirnfläche der Führungsstange 26 anliegt.

Mit dem Ventilstück 62 ist somit ein Packet aus dem Dämpferkolben 24, dem Führungsring 76, der Federscheibe 82, den Federscheiben 88, den Ventilkörper 84, den Ventilteil 94 und der Federscheibe 96 an der Führungsstange 26 festgelegt. Die Ventile 54, 56 und 58 bilden somit eine äußerst kompakte und einfach aufgebaute Einheit.

Der zum Ventil 54 durch das Ventilstück 62 strömende Volumenstrom ist durch den Kompressionsventilkörper 46 einstellbar. Dieser ist hierfür in Axialrichtung über den Hebel 48, siehe Figur 1, verschiebbar, wodurch ein Öffnungsquerschnitt zwischen einem vom Gehäuse 2 aus Figur 1 wegweisenden Endabschnitt 100 des Kompressionsventilkörpers 46 und der Durchgangsbohrung 98 des Ventilstücks 62 einstellbar ist. Die Einstellmöglichkeiten sind unten stehend in der Beschreibung näher erläutert.

Im Folgenden wird anhand der Figur 2 die Funktion der Feder-Dämpfervorrichtung 1 aus Figur 1 bei einem Einfedervorgang erläutert, bei dem die Dämpfungseinrichtung als Kompressionsdämpfung wirkt. Es wird davon ausgegangen, dass der Endabschnitt 100 in seiner Öffnungsposition angeordnet ist.

Im Folgenden wird unterschieden zwischen einer Einfederung der Feder-Dämpfungseinrichtung 1 in einem langsamen, in einem mittleren und in einem schnellen Geschwindigkeitsbereich. Im langsamen Geschwindigkeitsbereich, d. h. bei leichteren Stößen der Hinterradaufhängung wird der Gaskolben 10 aus der Figur 1 vergleichsweise langsam in Richtung des sich verkleinernden Ringraums 52 verschoben. Hierbei wird gleichzeitig der Dämpferkörper 12 relativ zum Dämpferkolben 24 verschoben, wodurch der Zylinderraum 28 des Dämpferkörpers 12 ebenfalls verkleinert wird. Der Druck des Fluids in diesem Zylinderraum 28 steigt hierdurch an, während der Druck im Ringraum 30 des Dämpferkörpers 12 sich verringert. Aufgrund der Druckdifferenz wirkt auf die Ventile 54, 56 und 58 eine Druckkraft in deren Öffnungsrichtung. Die Öffnungskräfte sind dabei derart eingestellt, dass das Ventil 54 als erstes öffnet. Bei langsamen Geschwindigkeiten öffnet somit die Federscheibe 96 des Ventils 54 eine Fluidverbindung zwischen dem Zylinderraum 28 und dem Ringraum 30, wodurch ein Volumenstrom zum Druckausgleich über dieses Ventil 54 strömen kann.

Im Bereich mittlerer Einfedergeschwindigkeiten steigt die Druckdifferenz zwischen dem Zylinderraum 28 und dem Ringraum 30 weiter an, wobei dann zusätzlich zum Ventil 54 das Ventil 56 öffnet, indem der Ventilkörper 84 axial verschoben wird. In diesem mittleren Geschwindigkeitsbereich sind somit beide Ventile 54 und 56 geöffnet, wodurch ein größerer Volumenstrom zwischen dem Zylinderraum 28 und dem Ringraum 30 strömen kann, wodurch die auf die Feder-Dämpfervorrichtung 1 wirkenden Kräfte vermindert werden.

Zur Vermeidung von hohen Belastungen für die Feder-Dämpfervorrichtung 1 im Bereich schneller Geschwindigkeiten, insbesondere bei starken Stößen auf die Hinterradaufhängung, dient das Ventil 58, das zusätzlich zu den Ventilen 54 und 56 bei Übersteigen einer bestimmten Druckdifferenz zwischen dem Zylinderraum 28 und dem Ringraum 30 öffnet. Hierdurch wird ein Öffnungsquerschnitt für einen Volumenstrom zwischen dem Zylinderraum 28 und dem Ringraum 30 weiter vergrößert, wodurch die auf die Feder-Dämpfervorrichtung 1 wirkende Belastung verringert ist.

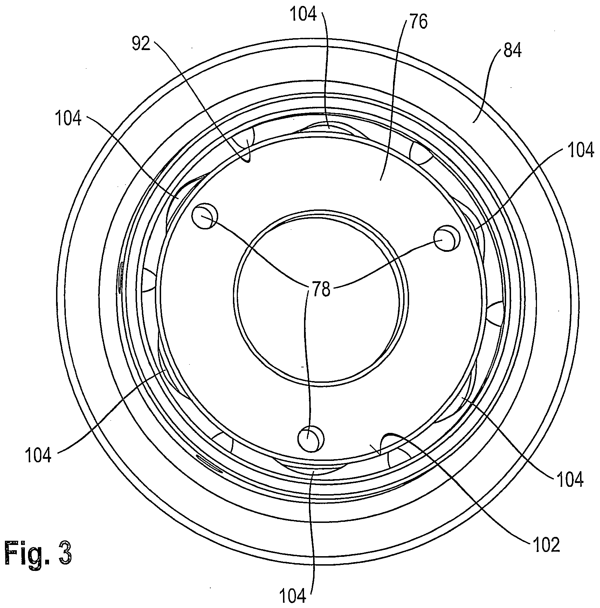

Die Figur 3 zeigt in einer perspektivischen Darstellung den Führungsring 76 zusammen mit dem Ventilkörper 84. Hierbei sind die drei Durchgangsöffnungen 78 mit dem Führungsring 76 erkennbar, die gleichmäßig auf einem gemeinsamen Teilkreis verteilt sind. In der Figur 3 sind des Weiteren sechs Radialaussparungen 92 des Ventilkörpers 84 erkennbar, die ebenfalls gleichmäßig auf einem gemeinsamen Teilkreis angeordnet sind. Zusätzlich zu den Radialaussparungen 92 sind in einer Innenmantelfläche 102 sechs Längsnuten 104 eingebracht, mit denen ein Strömungsquerschnitt bei geöffnetem Ventil 58 und geöffnetem Ventil 56 des Fluids, das über die Durchgangsöffnungen 78 und 80, siehe Figur 2, strömt, vergrößert ist.

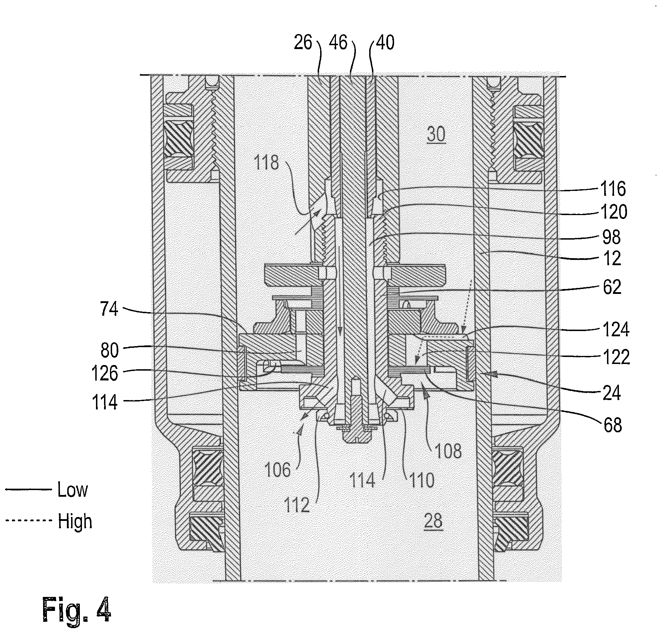

In der Figur 4 ist ein vergrößerter Ausschnitt der Feder-Dämpfervorrichtung 1 aus Figur 1 im Bereich des Dämpferkolbens 24 dargestellt. Anhand der Figur 4 wird die Zugstufendämpfung der Feder-Dämpfervorrichtung 1 erläutert, bei der sich die Luftfedereinrichtung mit dem Luftzylinder 6 entspannt. In dieser Phase wird der Gaskolben 10 in Richtung eines sich vergrößernden Ringraums 52 bewegt, wodurch der Dämpferkolben 24 relativ zum Dämpferkörper 12 in Richtung eines sich verkleinernden Ringraums 30 des Dämpferkörpers 12 verschoben wird. Hierdurch steigt der Druck im Ringraum 30 im Vergleich zum Zylinderraum 28 an, weshalb zum Druckausgleich ein Fluid aus dem Ringraum 30 über ein Ventil 106 und 108 strömen kann.

Das Ventil 106 hat eine am Ventilstück 62 festgelegte Federscheibe 110. Diese ist auf einem weg vom Dämpferkolben 24 weisenden Axialvorsprung des Ventilstücks 62 aufgesetzt und mit einer Mutter 112, die auf den Axialvorsprung aufgeschraubt ist, fixiert. Die Federscheibe 110 verschließt im geschlossenen Zustand Schrägbohrungen, die dem Querschenkel 114 des Ventilstücks 62 eingebracht sind und in dessen axialer Durchgangsbohrung 98 münden. Die Durchgangsbohrung 98 des Ventilstücks 62 mündet in einem Ringraum 116 der Führungsstange 26. Der Ringraum wird hierbei von einer Stirnseite des Ventilstücks 62 begrenzt und ist über eine in die Führungsstange 26 eingebrachte Schrägbohrung 118 mit dem Ringraum 30 des Dämpferkörpers 12 fluidisch verbunden. Eine Innenfase des Ventilstücks 62, das zum Ringraum 116 weist dient hierbei als Ventilsitz 120 für den Zugstufenventilkörper 40. Mit diesem kann ein Öffnungsquerschnitt zwischen dem Ringraum 116 und der Durchgangsbohrung 98 über die Verstellvorrichtung 42 aus der Figur 1 eingestellt werden. Hierbei handelt es sich um die Einstellung der sogenannten "Zugstufe".

Das Ventil 108 besteht aus den Beilagscheiben 68 der Figur 2, die als Federscheiben 68 eingesetzt sind. Im geschlossenen Zustand liegen die Federscheiben, bei denen es sich insgesamt um vier Stück handelt, an einer Innenbodenfläche des Dämpferkolbens 24 an und verschließen hierbei eine axial in den Dämpferkolben 24 eingebrachte Durchgangsöffnung 122, die im Bereich zwischen dem Führungsring 76 und dem Ventilkörper 84 aus Figur 2 an der Stirnseite 74 des Dämpferkolbens 24 mündet. Über eine in die Stirnseite 74 eingebrachte Radialnut 124 ist die Durchgangsöffnung 122 mit dem Ringraum 30 fluidisch verbunden. Damit die Federscheiben 68 nicht die Durchgangsöffnung 80 für das Ventil 58 aus Figur 2 verschließen, ist diese ebenfalls über eine Radialnut 126, die in die von der Stirnseite 74 weg weisende Bodenfläche des Dämpferkolbens 24 eingebracht ist, mit dem Zylinderraum 28 verbunden. Ab einer bestimmten Druckdifferenz zwischen dem Ringraum 30 und dem Zylinderraum 28 öffnen die Ventile 106 und 108, indem deren Federscheiben 110 bzw. 68 elastisch hin zum Zylinderraum 28 gebogen werden. Die Ventile 54, 56 und 58 aus der Figur 2 sind aufgrund des höheren Drucks im Ringraum 30 geschlossen. Ist der Kompressionsventilkörper 46 in einer Öffnungsposition, so kann zusätzlich neben den Schrägbohrungen 114 das Fluid über dessen freigegebene Durchgangsöffnung strömen.

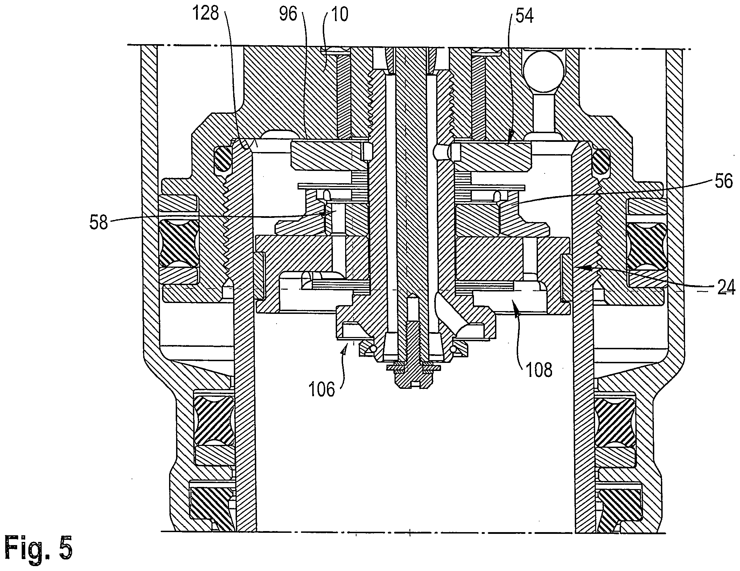

Figur 5 zeigt einen vergrößerten Ausschnitt der Feder-Dämpfervorrichtung 1 aus Figur 1 im Bereich des Dämpferkolbens 24. Hierbei ist ein Ruhezustand der Feder-Dämpfervorrichtung 1 dargestellt. Das Ventil 54 liegt hierbei mit seiner Federscheibe 96 an einer Innenbodenfläche 128 des Gaskolbens 10 an. Um einzustellen, bei welchem Druckunterschied die Ventile 54, 56, 58, 106 und 108 öffnen, kann die Anzahl der diesen Ventilen zugeordneten Federscheiben bei der Montage variiert werden. Je mehr Federscheiben einem Ventil zugeordnet sind, eine desto größere Druckdifferenz ist nötig, damit das jeweilige Ventil öffnet.

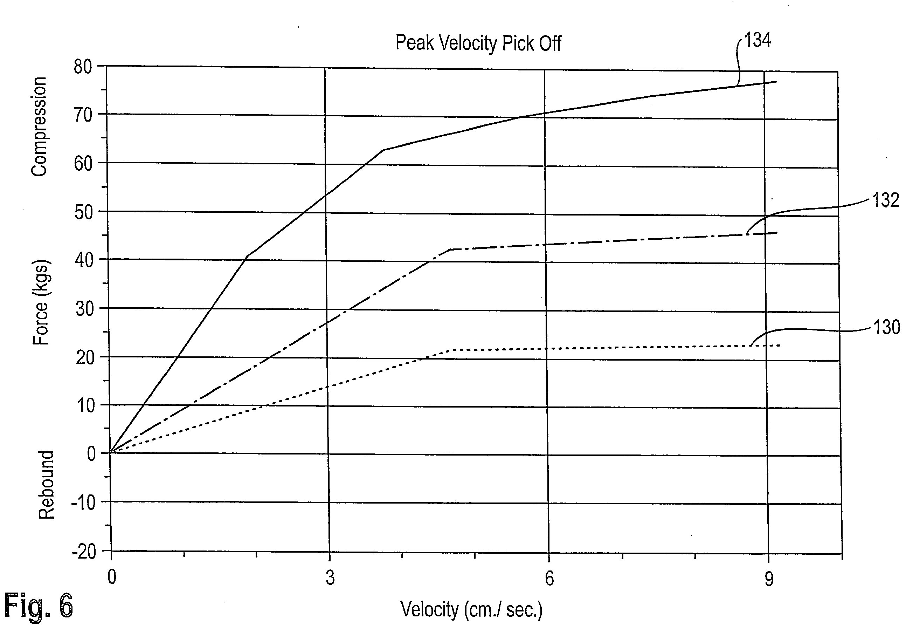

In der Figur 6 ist ein Geschwindigkeits-Dämpfungskraft-Diagramm dargestellt, in dem eine untere Kurve 130 und eine mittlere Kurve 132 an dem Geschwindigkeits-Dämpfungskraft-Verlauf von herkömmlichen Feder-Dämpfervorrichtungen darstellen, während eine obere Kurve 134 beispielhaft den Geschwindigkeits-Dämpfungskraft-Verlauf der erfindungsgemäßen Feder-Dämpfervorrichtung 1 darstellt. Herkömmliche Feder-Dämpfervorrichtungen weisen in ihrer Kompressionsphase keine drei wirksamen Ventile auf, bei der erfindungsgemäßen Feder-Dämpfervorrichtung 1 vorgesehen ist. Hierdurch ergibt sich der zweiteilige Verlauf der Kurven 130 und 132. Bei der Kurve 130 handelt es sich um einen "weich" eingestellte Feder-Dämpfervorrichtung. Hierbei ist ein in der Kompressionsphase erstes Ventil vorgesehen, das bis zu einer Geschwindigkeit von etwa 5 cm/s einen Volumenstrom eines Fluids einer Dämpfereinrichtung steuert. Bei höheren Geschwindigkeiten ist ein Überdruckventil vorgesehen, das eine derart großen Öffnungsquerschnitt für den Volumenstrom freigibt, dass eine Dämpfungskraft nicht weiter ansteigt. Hierbei ist zwar eine Belastung der Feder-Dämpfervorrichtung gering, allerdings kann dies nachteilig bei starken Stößen einer Hinterradschwinge zu einem Durchschlagen der Feder-Dämpfervorrichtung führen.

Die Kurve 132 zeigt eine Feder-Dämpfervorrichtung aus dem Stand der Technik, die "härter" eingestellt ist. Bis zu einer Geschwindigkeit von etwa 5 cm/s steigt eine Dämpfungskraft in der Kompressionsphase stärker als bei der Kurve 130 an, wodurch ein Durchschlagen der Feder-Dämpfervorrichtung eher nicht mehr möglich ist. Bei höheren Geschwindigkeiten öffnet auch hier ein Überdruckventil, womit Kompressionskräfte kaum mehr ansteigen.

Die Kurve 134 ist im Gegensatz zu den Kurven 130 und 132 dreiteilig aufgebaut. Im ersten Teil, im Geschwindigkeitsbereich zwischen 0 und 2 cm/s wirkt hierbei in der Kompressionsphase das Ventil 54 aus Figur 2, und somit in einem langsamen Geschwindigkeitsbereich. Steigt die Geschwindigkeit weiter an, etwa bis zu 4 cm/s, so öffnet das Ventil 56 in der Figur 2, womit die Kompressionskräfte geringer als im langsamen Geschwindigkeitsbereich ansteigen. Nach diesem mittleren Geschwindigkeitsbereich etwa ab 4 cm/s öffnet dann das dritte Ventil 58, um den Anstieg der Kompressionskräfte weiter zu verringern. Durch die drei Ventile 54, 56 und 58 aus Figur 2 kann somit ein Geschwindigkeits-Dämpfungskraft-Verlauf vergleichsweise fein eingestellt werden. Ein weiterer Vorteil ist, dass durch das Vorhandensein von zwei Ventilen 56 und 58 im mittleren bis hohen Geschwindigkeitsbereich deren jeweiliger freigegebener Öffnungsquerschnitt geringer als bei den Überdruckventilen aus dem Stand der Technik sein kann. Hierdurch gelangen die Ventile 56 und 58 vergleichsweise schnell zurück in ihre Schließposition, wenn die Kompressionsphase der Feder-Dämpfervorrichtung beendet ist und es zur Schubumkehr kommt, bei der die Luftfedereinrichtung ausfedert.

Die Feder-Dämpfervorrichtung 1 aus Figur 1 zeichnet sich durch ihre flexible Einstellbarkeit und insbesondere durch ihre Flexibilität im initialen Setup, d.h., bei ihrer Montage aus. Durch einfache Änderung der Anzahl von Federscheiben der jeweiligen Ventile kann eine Vielzahl von gewünschten Dämpfungscharakteristika erreicht werden, ohne dass weitere Änderungen bei der Feder-Dämpfervorrichtung 1 vorgenommen werden müssen. Äußerst vorteilhaft bei der vorliegenden Feder-Dämpfervorrichtung 1 ist ein zweistufiger Überlastungsschutz durch die beiden Ventile 56 und 58 aus der Figur 2. Hierbei ist anzumerken, dass im geschlossenen oder halb geschlossenen Zustand des Kompressionsventilkörpers 46 Stöße im Einsatz eines Fahrrads mit der Feder-Dämpfervorrichtung von bis zu 2 m/s auftreten können. Bei Federgabeln, bei der die Feder-Dämpfervorrichtung prinzipiell auch einsetzbar ist, können die Stöße bis zu 4 m/s betragen. Die Feder-Dämpfervorrichtung 1 hat hierbei in der Kompressionsphase im Wesentlichen zwei Aufgabe zu erfüllen: sie soll bei einer extrem hohen Beschleunigung eines Laufrades des Fahrrads, das einer mit der Feder-Dämpfervorrichtung 1 verbundenen Hinterradschwinge zugeordnet ist, die in Richtung der Feder-Dämpfervorrichtung wirkt einen Durchschlag der Feder-Dämpfervorrichtung 1 zu vermeiden. Hierfür sollte die Kompressionsphase im Wesentlichen kurz vor Ende eines Dämpferhubs beendet sein und die Schubumkehr folgen. Laufräder mit einem höheren Gewicht benötigen demzufolge aufgrund ihrer Trägheit höhere Dämpfungskräfte als leichtere Laufräder. Im Anschluss zur Schubumkehrung nach der Kompressionsphase federt die Feder-Dämpfervorrichtung 1 aus und es setzt die Zugstufendämpfung ein. Eine weitere Aufgabe der Kompressionsdämpfung ist es, ein Aufschwingen des Fahrwerks des Fahrrads bei bestimmten Trittfrequenzen, beispielsweise bei einem Fahren eines Fahrers im Stehen zu vermeiden, und es wird der Kompressionsventilkörper 46 halb offen eingestellt, wobei es sich hierbei dann um die sogenannten "Plattformdämpfung" handelt. Hierbei kann ein begrenzter Volumenstrom des Fluids noch über das Ventil 54 aus Figur 2 strömen, wodurch eine gewisse Federung erhalten bleibt. Wird der Kompressionsventilkörper 46 vollständig geschlossen, so handelt es sich hierbei um den sogenannten "Lockout-Modus", bei dem kein Volumenstrom mehr über das Ventil 54 aus der Figur 2 strömen kann. Dies kann beispielsweise zu einem Kontraktionsverlust in unwegsamem Gelände führen.

Vergisst ein Fahrer in unwegsamem Gelände den Kompressionsventilkörper 46 zu öffnen, dann dienen die Ventile 56 und 58 aus der Figur 2 als Überlastungsschutz. Im Stand der Technik ist dieser Überlastungsschutz aufgrund eines einzelnen Ventils schwer einstellbar. Wird das Ventil zu niedrig eingestellt, d.h. es öffnet schon bei geringen Druckdifferenzen, um eine sensibles Ansprechverhalten zu erhalten, so steigt die Wahrscheinlichkeit eines Durchschlages. Wird dagegen der Überlastungsschutz zu hoch gewählt, so wird das Fahrwerk im mittleren Geschwindigkeitsbereich der Feder-Dämpfervorrichtung 1, bei dem es sich um den meisten gefahrenen Zustand handelt, sehr unsensibel. Aus diesem Grund weist die vorliegende Feder-Dämpfervorrichtung 1 eine "Dreiteilung" der Dämpfungscharakteristik auf, um auch Schläge in niedrigen (lowspeed dampening), mittleren (midspeed dampening) und hohem Geschwindigkeitsbereich (highspeed dampening) entsprechend reagieren zu können. Der Überlastungsschutz (highspeed compression dampening unit) ist zerlegt in die beiden Ventile 56 und 58 aus Figur 2. Das Ventil 56 soll dabei insbesondere einen Volumenstrom des Fluids und die Schubumkehr bei mittleren und schnellen Einfederungsgeschwindigkeiten regulieren. Beim Stand der Technik ist in Extremsituationen jedoch ist der Volumenstrom oft nicht ausreichend, wodurch die Feder-Dämpfervorrichtung 1 bei straffer Dämpfungsabstimmung entweder stark belastet oder zu weicher Abstimmung zum Durchschlagen neigt. Die vorliegende Feder-Dämpfervorrichtung 1 erlaubt es auch auf diese extremen Schläge zu reagieren, viel Volumenstrom aufgrund des Ventils 58 zu erlauben und sofort gegen Ende des Einfederungsvorgangs zu Schubumkehr einzuleiten. Hierdurch wird das Risiko eines Durchschlages aufgrund der Laufradträgheit (je schwerer, umso höher die Trägheit) vermindert und dem Fahrer in Extremsituationen trotzdem genug Federweg zur Verfügung gestellt, um Hindernisse sicher zu überwinden. Gleichzeitig bleibt die Feder-Dämpfervorrichtung 1 sensibel genug im regulären Fahrbetrieb.

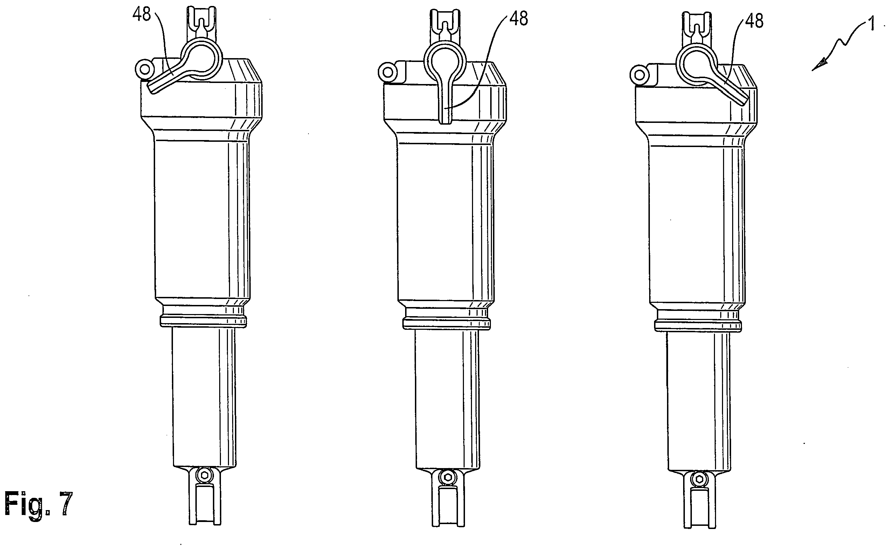

Figur 7 zeigt in einer Seitenansicht die Feder-Dämpfervorrichtung 1 mit drei unterschiedlichen Stellungen des Hebels 48. In der mittleren Darstellung ist der Hebel 48 etwa in einer Längsrichtung der Feder-Dämpfervorrichtung 1 ausgerichtet. In dieser Stellung ist der Kompressionsventilkörper, siehe Figur 1 und 2 vollständig in einer Öffnungsposition. Im Stand der Technik dagegen ist bei einer vollständigen Öffnung des Kompressionsventilkörpers 46 der Hebel angestellt zur Längsachse ausgerichtet, wie es in den benachbarten Abbildungen dargestellt ist. Durch die erfindungsgemäße Ausrichtung entlang der Längsache des Hebels 48 kann ein Bediener eindeutig feststellen, dass der Kompressionsventilkörper 46 vollständig geöffnet ist. In der rechten Abbildung ist der Hebel gegen den Uhrzeigersinn etwa um 45° in seiner Mittelstellung nach Rechts verschwenkt. Hierbei ist der Kompressionsventilkörper 46 etwa in einer halb offenen Position, was als "Plattform-Modus" bezeichnet wird. In der linken Abbildung ist der Hebel 48 im Uhrzeigersinn etwa um 45° zur Längsachse verschwenkt, wobei sich hier der Kompressionsventilkörper 46 im "Lockout-Modus" befindet und geschlossen ist. Bei herkömmlichen Feder-Dämpfervorrichtungen ist üblicherweise beim verschwenkten Hebel wie in der linken Abbildung ein Kompressionsventilkörper vollständig geöffnet, bei einer Ausrichtung des Hebels zur Längsachse halb offen und, wie bei einer Ausrichtung entsprechend der rechten Abbildung, geschlossen. Für den Fahrer bzw. Bediener ist es jedoch logischer, sich an der Mittelposition zu orientieren, von der er dann sehr schnell eine der beiden Einstellungen (halb offen, geschlossen) wählen kann. Denkbar wäre neben den gezeigten drei Abstufungen weitere Abstufungen einer Öffnungsposition des Kompressionsventilkörpers 46 vorzusehen, beispielsweise acht Abstufungen. Dies würde dann von der Ausbildung von Nocken 135, siehe Figur 1, über die der Hebel 48 mit seiner Hebelachse 50 mit dem Kompressionsventilkörper 46 zusammen wirkt, gesteuert.

In der Figur 1 ist im Bereich des Gehäuses 2 bzw. Zylinderbodens ein Spacer 136 angeordnet, über dessen Größe das Volumen des Ringraums 52 eingestellt ist.

Bei einem Innendurchmesser des Ringraums 52 kann in einem voll eingefederten Zustand das Kompressionsverhältnis (ausgefedertes Volumen / eingefedertes Volumen) mindestens 2,8 betragen. Durch das Hinzufügen eines Spacers 136 kann dieses Verhältnis beispielsweise auf 4,0 angepasst werden, um den verschiedenen Anforderungen der Fahrwerkskinematik gerecht zu werden. Bei herkömmlichen Feder-Dämpfervorrichtungen erfolgt das Einstellen des Kompressionsverhältnisses über verschiedene Luftkammergehäuse (aircan), was vergleichsweise teuer ist. Der Spacer 136 ist in der Figur 1 topfförmig ausgebildet und hat eine Durchgangsöffnung über die er auf den Axialvorsprung 38 aufgesetzt und mit diesem fest verbunden ist. Mit seinem konkaven Innenraum weist er vom Gehäuse 2 weg. Der Spacer kann beispielsweise hohl ausgeführt sein, um Gewicht zu sparen oder es besteht aus geschlossenen, zelligem Kunststoff. Durch die Anpassung einer Federkennlinie der Federeinrichtung über den Spacer soll eine maximale Ausnutzung des Federwegs, sowie eine möglichst lineare Kennlinie geschaffen werden.

### Bezugszeichenliste:

- 1: Feder-Dämpfervorrichtung
- 2: Gehäuse / Zylinderboden
- 4: Öse
- 6: Luftzylinder
- 8: Federrohr
- 10: Gaskolben
- 12: Dämpferkörper
- 14: Führungsbuchse
- 16: Abstreiferring
- 18: Dichtring
- 20: Endabschnitt
- 22: Öse
- 24: Dämpferkolben
- 26: Führungstange
- 28: Zylinderraum
- 30: Ringraum
- 32: Trennkolben
- 34: Ausgleichsraum
- 36: Ringdichtung
- 37: Dichtring
- 38: Axialvorsprung
- 39: Gleitring
- 40: Zugstufenventilkörper
- 41: Ringraum
- 42: Verstellvorrichtung
- 44: Drehknopf
- 46: Kompressionsventilkörper
- 48: Hebel
- 50: Hebelachse
- 52: Ringraum
- 54: Ventil
- 56: Ventil
- 58: Ventil
- 60: Aussparung
- 62: Ventilstück
- 64: Endabschnitt
- 66: Endabschnitt
- 68: Beilagscheiben / Federscheiben
- 70: Querschenkel
- 72: Kolbenring
- 74: Stirnseite
- 76: Führungsring
- 78: Durchgangsöffnung
- 80: Durchgangsöffnung
- 82: Federscheibe
- 84: Ventilkörper
- 86: Stützbund
- 88: Federscheiben
- 90: Durchgangsbohrung
- 92: Radialaussparung
- 94: Ventilteil
- 96: Federscheibe
- 98: Durchgangsbohrung
- 100: Endabschnitt
- 102: Innenmantelfläche
- 104: Längsnut
- 106: Ventil
- 108: Ventil
- 110: Federscheibe
- 112: Mutter
- 114: Schrägbohrung
- 116: Ringraum
- 118: Schrägbohrung
- 120: Ventilsitz
- 122: Durchgangsöffnung
- 124: Radialnut
- 126: Radialnut
- 128: Innenbodenfläche
- 130: Kurve
- 132: Kurve
- 134: Kurve
- 135: Nocken
- 136: Spacer

## Patentansprüche

1. Feder-Dämpfervorrichtung mit einem festlegbaren Gehäuse (2), an dem eine Federeinrichtung abstützbar ist, die über einen mit einem zu dämpfenden Element verbindbaren Dämpferkörper (12) einer Dämpfereinrichtung in einer Federrichtung spannbar ist, wobei im Dämpferkörper (12) ein fest mit dem Gehäuse (2) verbundener Dämpferkolben (24) geführt ist, der im Dämpferkörper (12) zwei Dämpferräume (28, 30) räumlich trennt, wobei drei Ventile (54, 56, 58) vorgesehen sind, mit denen ein Volumenstrom eines Fluids zwischen den Dämpfungsräumen (28, 30) beim Spannen der Federeinrichtung in Federrichtung steuerbar ist, **dadurch gekennzeichnet, dass** die drei Ventile (54, 56, 58) dabei in Abhängigkeit unterschiedlicher Druckdifferenzen zwischen den Dämpfungsräumen (28, 30) öffenbar sind.

2. Feder-Dämpfervorrichtung nach Anspruch 1, wobei der Dämpferkolben (24) fest mit einer am Gehäuse (2) festgelegten Führungsstange (26) verbunden ist und einen Zylinder- von einen von der Führungsstange (26) durchsetzten Ringraum (28, 30) trennt, wobei die drei Ventile (54, 56, 58) jeweils einen Volumenstrom des Fluids durch den Dämpferkolben (24) steuern.

3. Feder-Dämpfervorrichtung nach Anspruch 2, wobei die drei Ventile (54, 56, 58) jeweils bei Überschreiten einer jeweiligen vorbestimmten Druckdifferenz zwischen Zylinder- und Ringraum (28, 30) eine fluidische Verbindung zwischen dem Zylinder- und dem Ringraum (28, 30) öffnen und bei Unterschreiten der jeweiligen vorbestimmten Druckdifferenz die fluidische Verbindung schließen.

4. Feder-Dämpfervorrichtung nach Anspruch 3, wobei das erste Ventil (58) einen ringförmigen über die Führungstange (26) geführten und über eine Federscheibe (88) gegen eine Stirnfläche (74) des Dämpferkolben (24) gespannten Ventilkörper (84) hat, der bei der bestimmten Druckdifferenz gegen eine Federkraft der Federscheibe (88) eine im Dämpferkolben (24) eingebrachte erste Verbindungsaussparung (90) zwischen dem Zylinder- und Ringraum (28, 30) freigibt.

5. Feder-Dämpfervorrichtung nach Anspruch 4, wobei das zweite Ventil (56) eine vom Ventilkörper (84) des ersten Ventils (58) umgriffene und an der Führungsstange (26) festgelegte Federscheibe (82) hat, die sich bei der bestimmten Druckdifferenz elastisch aufbiegt und eine Verbindung einer im Dämpferkolben (24) eingebrachte zweite Verbindungsaussparung (80) zwischen dem Zylinder- und Ringraum (28, 30) freigibt.

6. Feder-Dämpfervorrichtung nach Anspruch 5, wobei zwischen der Federscheibe (82) des zweiten Ventils (56) und dem Dämpferkolben (24) ein an der Führungsstange (26) festgelegter Führungsring (76) zum Führen des Ventilkörpers (84) des ersten Ventils (58) angeordnet ist, der eine mit der zweiten Verbindungsaussparung (80) fluidisch verbundene Durchgangsöffnung (78) aufweist, die von der Federscheibe (82) des zweiten Ventils (56) auf- und zusteuerbar ist.

7. Feder-Dämpfervorrichtung nach einem der Ansprüche 4 bis 6, wobei das dritte Ventil (54) ein einen Strömungspfad vom Zylinder- zum Ringraum (28, 30) steuerndes Steuerventil ist.

8. Feder-Dämpfervorrichtung nach einem der Ansprüche 5 bis 7, wobei die Anzahl der dem ersten und/ oder dem zweiten Ventil (58, 56) zugeordneten Federscheiben (82, 88) variabel ist.

9. Feder-Dämpfervorrichtung nach einem der Ansprüche 6 bis 8,wobei der ringförmige Ventilkörper (84) des ersten Ventils (58) einen sich vom Dämpferkolben (24) wegerstreckenden Stützbund (86) aufweist, über den sich dieser an der Federscheibe (88) abstützt.

10. Feder-Dämpfervorrichtung nach Anspruch 9, wobei in dem Stützbund (86) des ringförmigen Ventilkörpers (84) des ersten Ventils (58) zumindest eine Durchgangsöffnung (92) zum fluidischen Verbinden eines vom Ventilkörper (84), der Federscheibe (88) des ersten Ventils (58), der Federscheibe (82) des zweiten Ventils (56) und dem Führungsring (76) begrenzten Ventilraums mit dem Ringraum des Dämpferkörpers (12) eingebracht ist.

11. Feder-Dämpfervorrichtung nach einem der Ansprüche 6 bis 10, wobei zwischen einer Außenmantelfläche des Führungsrings (76) und einer Innenmantelfläche (102) des ringförmigen Ventilkörpers (84) des ersten Ventils (58) zumindest eine Strömungsaussparung (104) vorgesehen ist, über die der Zylinder- und Ringraum (28, 30) des Dämpferkörpers (12) bei geöffnetem ersten und zweiten Ventils (58, 56) fluidisch verbunden sind.

12. Feder-Dämpfervorrichtung nach Anspruch 11, wobei die zumindest eine Strömungsaussparung als Längsnut (104) in die Innenmantelfläche (102) des ringförmigen Ventilkörpers (84) eingebracht ist.

## Claims

1. A suspension damper device comprising a housing (2) adapted to be affixed, on which a suspension means may be supported which may be tensed in a direction of suspension via a damper body (12) of a damping means adapted to be connected to a component to be dampened, wherein in the damper body (12) a damper piston (24) fixedly connected to the housing (2) is guided which physically separates two damper spaces (28, 30) in the damper body (12), wherein three valves (54, 56, 58) are provided whereby a volume flow of a fluid between the damping spaces (28, 30) may be controlled during tensing of the suspension means in the direction of suspension, **characterized in that** the three valves (54, 56, 58) can be opened in dependence on different pressure differences between the damper spaces (28, 30).

2. The suspension damper device according to claim 1, wherein the damper piston (24) is fixedly connected to a guide rod (26) affixed to the housing (2) and separates a cylinder space from an annular space (28, 30) through which the guide rod (26) extends, wherein the three valves (54, 56, 58) each control a volume flow of the fluid through the damper piston (24).

3. The suspension damper device according to claim 2, wherein the three valves (54, 56, 58) each open a fluid connection between the cylinder space and the annular space (28, 30) when a respective predetermined pressure difference between the cylinder space and the annular space (28, 30) is exceeded, and close the fluid connection when the pressure difference drops below the respective predetermined pressure difference.

4. The suspension damper device according claim 3, wherein the first valve (58) comprises an annular valve body (84) which is guided via the guide rod (26) and is braced via a spring washer (88) against an end face (74) of the damper piston (24), said valve body (84) clearing a first connection recess (90) provided in the damper piston (24) between the cylinder space and the annular space (28, 30) at said defined pressure difference against a resilient force of the spring washer (88).

5. The suspension damper device according to claim 4, wherein the second valve (56) comprises a spring washer (82) encompassed by the valve body (84) of the first valve (58) and affixed to the guide rod (26), which elastically bends at said defined pressure difference and clears a connection of a second connection recess (80) provided in the damper piston (24) between the cylinder space and the annular space (28, 30).

6. The suspension damper device according to claim 5, wherein a guide ring (76) affixed to the guide rod (26) for guiding the valve body (84) of the first valve (58) is arranged between the spring washer (82) of the second valve (56) and the damper piston (24), said guide ring (76) having a through opening (78) in fluid communication with the second connection recess (80) which may be opened and closed by the spring washer (82) of the second valve (56).

7. The suspension damper device according to one of claims 4 to 6, wherein the third valve (54) is a control valve which controls a flow path from the cylinder space to the annular space (28, 30).

8. The suspension damper device according to one of claims 5 to 7, wherein the number of the spring washers (82, 88) allocated to the first and/or the second valve (58, 56) is variable.

9. The suspension damper device according to one of claims 6 to 8, wherein the annular valve body (84) of the first valve (58) comprises a support shoulder (86) extending away from the damper piston (24), whereby the latter is supported against the spring washer (88).

10. The suspension damper device according to claim 9, wherein in the support shoulder (86) of the annular valve body (84) of the first valve (58) at least one through opening (92) is provided for establishing a fluid connection between a valve space delimited by the valve body (84), the spring washer (88) of the first valve (58), the spring washer (82) of the second valve (56), and the guide ring (76), and the annular space of the damper body (12).

11. The suspension damper device according to one of claims 6 to 10, wherein between an outer jacket surface of the guide ring (76) and an inner jacket surface (102) of the annular valve body (84) of the first valve (58) at least one flow recess (104) is provided through which the cylinder space and the annular space (28, 30) of the damper body (12) are in fluid connection in the opened condition of the first and the second valve (58, 56).

12. The suspension damper device according to claim 11, wherein the at least one flow recess is provided as a longitudinal groove (104) in the inner jacket surface (102) of the annular valve body (84).

## Revendications

1. Dispositif amortisseur à ressort avec un boîtier (2) qui peut être fixé, au niveau duquel peut s'appuyer un dispositif à ressort qui peut être contraint dans une direction de ressort par l'intermédiaire d'un corps d'amortisseur (12) pouvant être relié à un élément à amortir, d'un système amortisseur, dans lequel un piston d'amortisseur (24) relié de manière fixe au boîtier (2) et séparant spatialement deux espaces d'amortisseur (28, 30) dans le corps d'amortisseur (12) est guidé dans le corps d'amortisseur (12), dans lequel il est prévu trois soupapes (54, 56, 58) avec lesquelles un flux volumique d'un fluide peut être commandé entre les espaces d'amortissement (28, 30) lors de la contrainte du système à ressort dans la direction de ressort, **caractérisé en ce que** les trois soupapes (54, 56, 58) peuvent alors être ouvertes en fonction de différences de pression différentes entre les espaces d'amortissement (28, 30).

2. Dispositif amortisseur à ressort selon la revendication 1, dans lequel le piston d'amortisseur (24) est relié de manière fixe à une tige de guidage (26) fixée au boîtier (2) et sépare un espace cylindrique d'un espace annulaire (28, 30) traversé par la tige de guidage (26), dans lequel les trois soupapes (54, 56, 58) commandent chacune un flux volumique du fluide via le piston d'amortisseur (24).

3. Dispositif amortisseur à ressort selon la revendication 2, dans lequel les trois soupapes (54, 56, 58), en présence d'une différence de pression supérieure à une différence de pression prédéterminée respective entre l'espace cylindrique et l'espace annulaire (28, 30), ouvrent une liaison fluidique entre l'espace cylindrique et l'espace annulaire (28, 30) et, en présence d'une différence de pression inférieure à la différence de pression prédéterminée respective, ferment la liaison fluidique.

4. Dispositif amortisseur à ressort selon la revendication 3, dans lequel la première soupape (58) a un corps de soupape (84) annulaire, qui est guidé par l'intermédiaire de la tige de guidage (26) et est contraint par l'intermédiaire d'une rondelle élastique (88) contre une surface frontale (74) du piston d'amortisseur (24) et qui, en présence de la différence de pression prédéterminée, libère contre une force élastique de la rondelle élastique (88) un premier évidement de liaison (90) pratiqué dans le piston d'amortisseur (24) entre l'espace cylindrique et l'espace annulaire (28, 30).

5. Dispositif amortisseur à ressort selon la revendication 4, dans lequel la deuxième soupape (56) a une rondelle élastique (82) qui est entourée par le corps de soupape (84) de la première soupape (58) et est fixée à la tige de guidage (26) et qui fléchit élastiquement en présence de la différence de pression déterminée et libère une liaison d'un second évidement de liaison (80) pratiqué dans le piston d'amortisseur (24) entre l'espace cylindrique et l'espace annulaire (28, 30).

6. Dispositif amortisseur à ressort selon la revendication 5, dans lequel un anneau de guidage (76) fixé à la tige de guidage (26) destiné à guider le corps de soupape (84) de la première soupape (58) est agencé entre la rondelle élastique (82) de la deuxième soupape (56) et le piston d'amortisseur (24), lequel anneau de guidage comporte une ouverture de passage (78) qui est reliée pour les fluides au second évidement de liaison (80) et qui peut être commandée par la rondelle élastique (82) de la deuxième soupape (56) afin d'être ouverte ou fermée.

7. Dispositif amortisseur à ressort selon l'une quelconque des revendications 4 à 6, dans lequel la troisième soupape (54) est une soupape de commande qui commande un trajet d'écoulement de l'espace cylindrique à l'espace annulaire (28, 30).

8. Dispositif amortisseur à ressort selon l'une quelconque des revendications 5 à 7, dans lequel le nombre de rondelles élastiques (82, 88) associées à la première et/ou à la deuxième soupape (58, 56) est variable.

9. Dispositif amortisseur à ressort selon l'une quelconque des revendications 6 à 8, dans lequel le corps de soupape (84) annulaire de la première soupape (58) comporte un collet d'appui (86) qui s'étend de manière à s'éloigner du piston d'amortisseur (24), par l'intermédiaire duquel celui-ci s'appuie à la rondelle élastique (88).

10. Dispositif amortisseur à ressort selon la revendication 9, dans lequel au moins une ouverture de passage (92) destinée à la liaison fluidique d'un espace de soupape, délimité par le corps de soupape (84), par la rondelle élastique (88) de la première soupape (58), par la rondelle élastique (82) de la deuxième soupape (56) et par l'anneau de guidage (76), avec l'espace annulaire du corps d'amortisseur (12) est réalisée dans le collet d'appui (86) du corps de soupape (84) annulaire de la première soupape (58).

11. Dispositif amortisseur à ressort selon l'une quelconque des revendications 6 à 10, dans lequel au moins un évidement d'écoulement (104) est prévu entre une surface enveloppante extérieure de l'anneau de guidage (76) et une surface enveloppante intérieure (102) du corps de soupape (84) annulaire de la première soupape (58), évidement d'écoulement par l'intermédiaire duquel l'espace cylindrique et l'espace annulaire (28, 30) du corps d'amortisseur (12) sont reliés pour les fluides lorsque la première et la deuxième soupape (58, 56) sont ouvertes.

12. Dispositif amortisseur à ressort selon la revendication 11, dans lequel l'au moins un évidement d'écoulement est réalisé comme une rainure longitudinale (104) dans la surface enveloppante intérieure (102) du corps de soupape (84) annulaire.
